# EUROPÄISCHE PATENTSCHRIFT

(11) **EP 3 018 278 B1**
(45) Veröffentlichungstag und Bekanntmachung des Hinweises auf die Patenterteilung: **07.02.2018**
(21) Anmeldenummer: 15190396.0
(22) Anmeldetag: 19.10.2015
(51) Int. Cl.: E05F 3/22

(54) **BEFESTIGUNGSSYSTEM FÜR EINE INTEGRIERTE GLEITSCHIENE**
FASTENING SYSTEM FOR AN INTEGRATED SLIDING RAIL
SYSTEME DE FIXATION POUR UN RAIL DE GUIDAGE INTEGRE

(30) Priorität: 04.11.2014 DE 102014222450
(43) Veröffentlichungstag der Anmeldung: 11.05.2016
(73) Patentinhaber: GEZE GmbH, 71229 Leonberg (DE)
(72) Erfinder: Wörner, Benjamin, 70825 Korntal-Münchingen (DE)

(56) Entgegenhaltungen:
- DE-A1-102004 012 638
- US-A1- 2007 186 377

## Beschreibung

Die Erfindung betrifft ein Befestigungssystem für eine integrierte Gleitschiene eines Türantriebs zur Befestigung der Gleitschiene in einer im Türrahmen oder im Türflügel vorgesehenen Aussparung.

Es sind bereits sogenannte integrierte Türschließer bekannt, die verdeckt liegend im Türblatt und Zarge eingelassen sind. Dabei kann die integrierte Gleitschiene in eine im Türrahmen oder im Türflügel vorgesehene Aussparung eingesetzt sein.

Zur Befestigung einer integrierten Gleitschiene in einem Holzrahmen oder einem Türflügel wird die Gleitschiene bisher soweit möglich über Endwinkel oder direkt über Bohrungen in der Gleitschiene mit dem Rahmen bzw. dem Türflügel verschraubt. Türrahmen oder Zargen sind nun aber nicht konstruktiv für den Einsatz einer Gleitschiene ausgelegt. Daher müssen häufig komplizierte Verbindungswinkel gefertigt und Ausfräsungen eingebracht werden, um eine Gleitschiene überhaupt montieren zu können. Durch die zusätzlich erforderlichen Bauteile und die aufwändige Montage entstehen relativ hohe Kosten.

Ein solches Befestigungsteil zeigen die US 2007/0186377 A1 und die DE 10 2004 012 638 A1.

Der Erfindung liegt die Aufgabe zugrunde, ein Befestigungssystem der eingangs genannten Art anzugeben, mit dem ein flexiblerer Einsatz sowie eine einfachere Montage einer jeweiligen integrierten Gleitschiene für einen Türantrieb ermöglicht und die Kosten entsprechend minimiert werden.

Diese Aufgabe wird erfindungsgemäß durch ein Befestigungssystem mit den Merkmalen des Anspruchs 1 gelöst. Bevorzugte Ausführungsformen des erfindungsgemäßen Befestigungssystems ergeben sich aus den Unteransprüchen, der nachfolgenden Beschreibung sowie der beigefügten Zeichnung.

Das erfindungsgemäße Befestigungssystem für eine integrierte Gleitschiene eines Türantriebs zur Befestigung der Gleitschiene in einer im Türrahmen oder im Türflügel vorgesehenen Aussparung weist wenigstens eine Klemmeinheit auf, die ein in ein stirnseitiges Ende der Gleitschiene einsetzbares Klemmelement, eine in dem Klemmelement allgemein in Längsrichtung der Gleitschiene verschiebbar gelagerte Klemmbacke sowie Stellmittel umfasst, über die die Klemmbacke gegen die benachbarte Stirnseite der Aussparung pressbar ist.

Aufgrund dieser Ausbildung wird nicht nur ein flexiblerer Einsatz eines jeweiligen integrierten Türschließers bzw. eines Türantriebs ermöglicht, es ergibt sich auch eine wesentlich einfachere Montage. Die bisher erforderlichen speziell anzupassenden Verbindungswinkel und speziellen Ausfräsungen entfallen. Die Gleitschiene muss nur noch eingesetzt und über die wenigstens eine Klemmeinheit fixiert werden. Mit dem einfacheren Aufbau und der einfacheren Handhabung und Montage werden auch die Gesamtkosten entsprechend reduziert.

Es kann nur einer der beiden stirnseitigen Enden der Gleitschiene oder auch beiden stirnseitigen Enden der Gleitschiene jeweils eine Klemmeinheit zugeordnet sein.

Gemäß einer bevorzugten praktischen Ausführungsform des erfindungsgemäßen Befestigungssystems umfasst das Klemmelement einer jeweiligen Klemmeinheit einen in die Gleitschiene einführbaren ersten Abschnitt und einen zweiten Abschnitt, der auch nach erfolgter Montage außerhalb der Gleitschiene verbleibt und mit einem radial äußeren Rand an der betreffenden Stirnseite der Gleitschiene zur Anlage kommt. Damit kann sich das Klemmelement über den radial äußeren Rand seines zweiten Abschnitts an der betreffenden Stirnseite der Gleitschiene abstützen, sobald die Klemmbacke gegen die benachbarte Stirnseite der Aussparung gepresst wird, um die Gleitschiene zu fixieren. Besondere Befestigungsmittel zur Fixierung des Klemmelements in der Gleitschiene sind somit nicht erforderlich.

Bevorzugt umfassen die Stellmittel einer jeweiligen Klemmeinheit wenigstens eine Spannschraube.

Dabei kann die Spannschraube sich zumindest im Wesentlichen parallel zur Längsachse der Gleitschiene erstrecken oder auch gegenüber der Längsachse der Gleitschiene zur offenen Längsseite der Gleitschiene hin geneigt sein. Im Fall einer entsprechend geneigten Spannschraube ist diese einfacher für ein entsprechendes Werkzeug zugänglich.

Das Klemmelement kann insbesondere mit einem mit dem Außengewinde der Spannschraube zusammenwirkenden Innengewinde versehen sein. Damit ist die Spannschraube durch Verdrehen im Klemmelement verstellbar, womit die Klemmbacke entsprechend ein- und ausgefahren werden kann.

Die Spannschraube kann aber auch in die Klemmbacke ein- und ausdrehbar sein, wobei die Spannschraube und die Klemmbacke mit entgegengesetzten Gewinden versehen sein können. Pro Umdrehung der Spannschraube ergibt sich somit ein doppelter Hub für die Klemmbacke.

Gemäß einer weiteren vorteilhaften Ausführungsform des erfindungsgemäßen Befestigungssystems ist die Spannschraube durch eine im Klemmelement gelagerte Mutter hindurchgeführt, deren Innengewinde mit dem Außengewinde der Spannschraube zusammenwirkt. Die Spannschraube ist somit über die vorzugsweise fest im Klemmelement sitzende Mutter im Klemmelement verstellbar, wodurch die Klemmbacke wieder ein- und ausgefahren werden kann.

Alternativ sind auch solche Ausführungen denkbar, bei denen die Stellmittel einer jeweiligen Klemmeinheit einen drehbar im Klemmelement gelagerten Exzenter umfassen, über den die Klemmbacke beaufschlagbar ist. Somit kann die Klemmbacke durch Drehen des Exzenters mittels eines geeigneten Werkzeugs ein- und ausgefahren werden.

Es kann auch, in einer nicht erfindungsgemäßen Ausführungsform, die Klemmbacke einer jeweiligen Klemmeinheit selbst als Exzenter ausgeführt und drehbar im Klemmelement gelagert sein.

Von Vorteil ist insbesondere auch, wenn die der benachbarten Stirnseite der Aussparung zugewandte Außenfläche der Klemmbacke einer jeweiligen Klemmeinheit mit einer Struktur versehen ist. Mit einer solchen Struktur ist eine besonders zuverlässige Fixierung der Gleitschiene gewährleistet. Dabei kann die betreffende Außenflächenstruktur der Klemmbacke beispielsweise Zacken, Spitzen oder dergleichen umfassen.

Gemäß einer weiteren zweckmäßigen praktischen Ausführungsform des erfindungsgemäßen Befestigungssystems ist die Spannschraube einer jeweiligen Klemmeinheit durch die Klemmbacke hindurch nach außen geführt. Dabei kann die Spannschraube zur besseren Fixierung insbesondere in einem Holzprofil an ihrem der benachbarten Stirnseite der Aussparung zugewandten Ende insbesondere eine Spitze aufweisen. Dabei ist die Klemmeinheit zweckmäßigerweise so ausgeführt, dass mit einer jeweiligen Betätigung der Spannschraube zunächst deren Spitze aus der Klemmbacke ausgefahren wird, bevor die Klemmbacke mit der Spannschraube mitgenommen und über diese schließlich gegen die benachbarte Stirnseite der Aussparung gepresst wird.

In bestimmten Fällen ist auch von Vorteil, wenn die Klemmbacke einer jeweiligen Klemmeinheit zumindest teilweise elastisch verformbar ausgeführt und mit einer jeweiligen Beaufschlagung durch die Stellmittel nach Art eines Dübels aufspreizbar ist. In diesem Fall wird die Klemmbacke in unterschiedlichen Richtungen gegen die benachbarte Begrenzung der Aussparung gepresst, wodurch eine besonders zuverlässige Fixierung der Gleitschiene erreicht wird.

Eine weitere zweckmäßige praktische Ausführungsform des erfindungsgemäßen Befestigungssystems zeichnet sich dadurch aus, dass die Spannschraube einer jeweiligen Klemmeinheit direkt gegen die benachbarte Stirnseite der Aussparung pressbar ist und die Spannschraube somit selbst als Klemmbacke dient.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielsweise als Ausfräsung in einen Türrahmen oder Zarge eingebrachten Aussparung, in die eine integrierte Gleitschiene eines Türantriebs einsetzbar ist,
- Fig. 2: eine schematische Darstellung einer in eine Aussparung gemäß Fig. 1 eingesetzten Gleitschiene, die mit einem Befestigungssystem gemäß einer beispielhaften Ausführungsform der Erfindung versehen ist, bei der beiden Seiten der Gleitschiene jeweils eine Klemmeinheit mit einer eine Spannschraube umfassenden Stellmitteln zugeordnet ist,
- Fig. 3: eine vergrößerte schematische Darstellung einer Klemmeinheit des Befestigungssystems gemäß Fig. 2,
- Fig. 4: eine geschnittene schematische Darstellung der Klemmeinheit gemäß Fig. 3,
- Fig. 5: eine schematische Darstellung einer weiteren beispielhaften Ausführungsform einer Klemmeinheit eines erfindungsgemäßen Befestigungssystems,
- Fig. 6: eine geschnittene schematische Darstellung der Klemmeinheit gemäß Fig. 5,
- Fig. 7: eine schematische Darstellung des Klemmelements und der Klemmbacke einer weiteren beispielhaften Ausführungsform einer Klemmeinheit eines erfindungsgemäßen Befestigungssystems, bei der die Außenfläche der Klemmbacke mit einer Struktur versehen ist,
- Fig. 8: eine schematische Darstellung einer weiteren beispielhaften Ausführungsform einer Klemmeinheit eines erfindungsgemäßen Befestigungssystems, bei der das Klemmelement mit einem mit dem Außengewinde der Spannschraube zusammenwirkenden Innengewinde versehen ist, wobei die Klemmbacke im eingefahrenen Zustand dargestellt ist,
- Fig. 9: eine schematische Darstellung der Klemmeinheit gemäß Fig. 8 in einem Zustand, in dem die Klemmbacke ausgefahren ist,
- Fig. 10: eine schematische Darstellung einer weiteren beispielhaften Ausführungsform einer Klemmeinheit eines erfindungsgemäßen Befestigungssystems, bei der die Spannschraube in die Klemmbacke einund ausdrehbar ist und das Klemmelement und die Klemmbacke entgegengesetzte Gewinde aufweisen,
- Fig. 11: eine schematische Darstellung einer weiteren beispielhaften Ausführungsform einer Klemmeinheit eines erfindungsgemäßen Befestigungssystems, bei der die Spannschraube durch eine im Klemmelement gelagerte, mit einem Innengewinde versehene Mutter hindurchgeführt ist,
- Fig. 12: eine schematische Darstellung einer weiteren beispielhaften Ausführungsform einer Klemmeinheit eines erfindungsgemäßen Befestigungssystems, bei der die Spannschraube eine Spitze aufweist, wobei die Klemmbacke im eingefahrenen Zustand dargestellt ist,
- Fig. 13: eine schematische Darstellung der Klemmeinheit gemäß Fig. 12 in einem Zustand, in dem die Klemmbacke ausgefahren ist,
- Fig. 14: eine schematische Darstellung einer weiteren beispielhaften Ausführungsform einer Klemmeinheit eines erfindungsgemäßen Befestigungssystems, bei der die Spannschraube direkt gegen die benachbarte Stirnseite der Aussparung pressbar ist und die Spannschraube somit selbst als Klemmbacke dient,
- Fig. 15: eine schematische Darstellung einer weiteren beispielhaften Ausführungsform einer Klemmeinheit eines erfindungsgemäßen Befestigungssystems, bei der die Klemmbacke mit einer jeweiligen Beaufschlagung durch die Stellmittel nach Art eines Dübels aufspreizbar ist, wobei die Klemmbacke im eingefahrenen Zustand dargestellt ist, und
- Fig. 16: eine schematische Darstellung der Klemmeinheit gemäß Fig. 15 in einem Zustand, in dem die Klemmbacke ausgefahren ist.

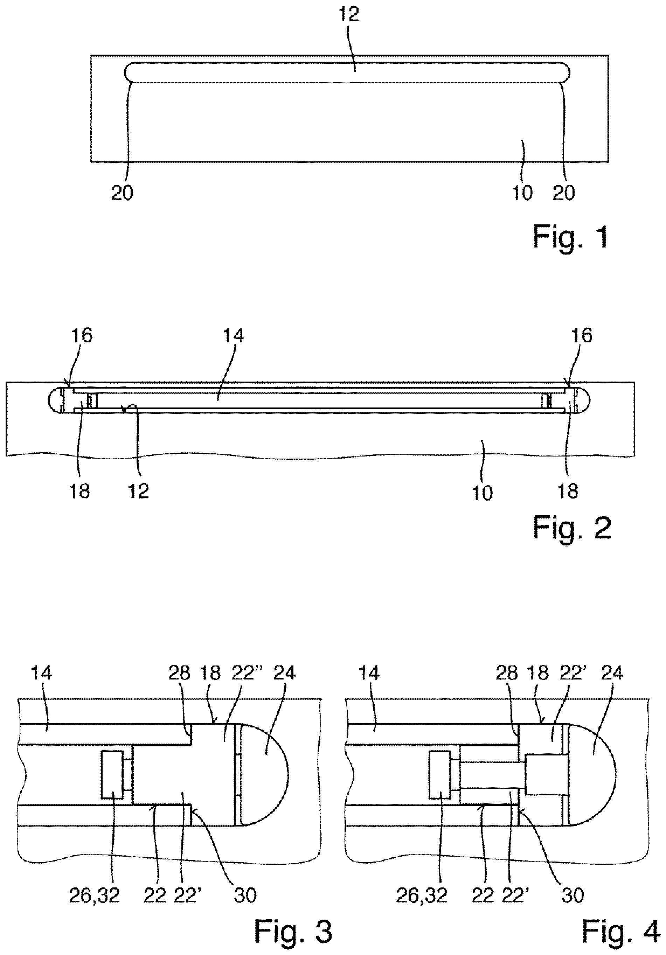

Fig. 1 zeigt in schematischer Darstellung eine beispielsweise als Ausfräsung in einen Türrahmen oder eine Zarge 10 eingebrachte Aussparung 12, in die eine integrierte Gleitschiene eines integrierten Türöffners bzw. eines Türantriebs einsetzbar ist. Grundsätzlich kann die integrierte Gleitschiene auch in eine entsprechende in einem Türflügel vorgesehene Aussparung einsetzbar sein.

Fig. 2 zeigt in schematischer Darstellung eine in eine solche Aussparung 12 eingesetzte Gleitschiene 14, die mit einem Befestigungssystem 16 gemäß einer beispielhaften Ausführungsform der Erfindung versehen ist.

Dabei umfasst das Befestigungssystem 16 zur Befestigung der integrierten Gleitschiene 14 in der betreffenden im Türrahmen oder dem Türflügel vorgesehenen Aussparung 12 wenigstens eine Klemmeinheit 18, wobei im vorliegenden Fall beispielsweise beiden Seiten der Gleitschiene 14 jeweils eine solche Klemmeinheit 18 zugeordnet ist. Grundsätzlich sind jedoch auch Ausführungen denkbar, bei denen nur einer Seite der Gleitschiene 14 mit einer solchen Klemmeinheit 18 versehen ist.

Fig. 3 zeigt in vergrößerter schematischer Darstellung eine der beiden zumindest im Wesentlichen identisch ausgeführten Klemmeinheiten 18 gemäß Fig. 2. In Fig. 4 ist diese Klemmeinheit 18 nochmals in einer geschnittenen schematischen Darstellung wiedergegeben.

Danach umfasst die Klemmeinheit 18 ein in ein stirnseitiges Ende 20 (vgl. nochmals Fig. 1) der Gleitschiene 14 einsetzbares Klemmelement 22, eine in dem Klemmelement 22 allgemein in Längsrichtung der Gleitschiene 14 verschiebbar gelagerte Klemmbacke 24 sowie Stellmittel 26, über die die Klemmbacke 24 gegen die benachbarte Stirnseite der Aussparung 12 pressbar ist.

Das Klemmelement 22 einer jeweiligen Klemmeinheit 18 umfasst einen in die Gleitschiene 14 einführbaren ersten Abschnitt 22' und einen zweiten Abschnitt 22", der auch nach erfolgter Montage außerhalb der Gleitschiene 14 verbleibt und mit einem radial äußeren Rand 28 an der betreffenden Stirnseite 30 der Gleitschiene 14 zur Anlage kommt.

Im vorliegenden Fall umfassen die Stellmittel 26 einer jeweiligen Klemmeinheit 28 beispielsweise wenigstens eine Spannschraube 32. Dabei kann diese Spannschraube 32 sich zumindest im Wesentlichen parallel zur Längsachse der Gleitschiene 14 erstrecken oder gegenüber der Längsachse der Gleitschiene 14 zur offenen Längsseite der Gleitschiene 14 hin geneigt sein. Mittels der Spannschraube 32 wird die Klemmbacke 24 gegen die benachbarte Stirnseite der Aussparung 12 gepresst und die Gleitschiene 14 so fixiert. Dabei stützt sich das Klemmelement 22 über den radial äußeren Rand 28 seines zweiten Abschnitts 22" an der als Gegenlager dienenden betreffenden Stirnseite der Gleitschiene 14 ab. Mit einer gegenüber der Längsachse der Gleitschiene 14 schräggestellten Spannschraube 32 ist die Spannschraube 32 leichter für ein jeweiliges Werkzeug zugänglich.

Das Klemmelement 22 kann hier beispielsweise mit einem mit dem Außengewinde der Spannschraube 32 zusammenwirkenden Innengewinde versehen sein, während die Spannschraube 32 fest in der Klemmbacke 24 verankert ist.

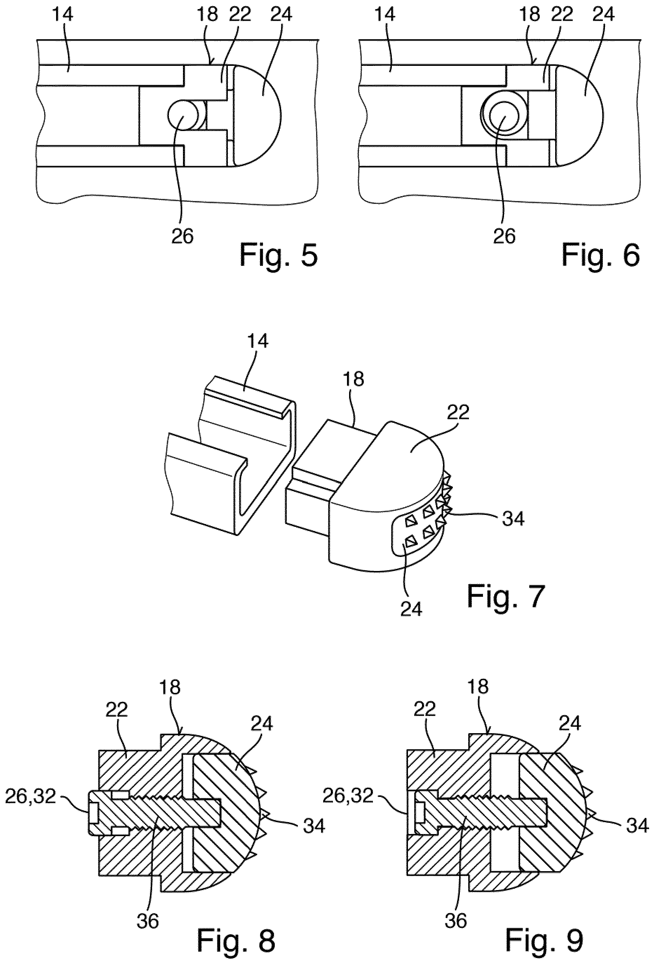

Fig. 5 zeigt in schematischer Darstellung eine weitere beispielhafte Ausführungsform einer Klemmeinheit 18 eines erfindungsgemäßen Befestigungssystems, bei der die Stellmittel 26 der Klemmeinheit 18 einen drehbar im Klemmelement 22 gelagerten Exzenter umfassen, über den die Klemmbacke 24 beaufschlagbar ist. In Fig. 6 ist die Klemmeinheit 18 gemäß Fig. 5 nochmals in einer geschnittenen schematischen Darstellung wiedergegeben. Somit kann die Klemmbacke 24 durch Drehen des als Stellmittel 26 dienenden Exzenters mittels eines geeigneten Werkzeugs ein- und ausgefahren werden.

Fig. 7 zeigt in schematischer Darstellung das Klemmelement 22 und die Klemmbacke 24 einer weiteren beispielhaften Ausführungsform einer Klemmeinheit 18, bei der die der benachbarten Stirnseite der Aussparung 12 zugewandte Außenfläche der Klemmbacke 24 der Klemmeinheit 18 mit einer Struktur 34 versehen ist. Dabei kann die betreffende Außenflächenstruktur 34 der Klemmbacke 24 beispielsweise Zacken, Spitzen oder dergleichen umfassen.

Fig. 8 zeigt in schematischer Darstellung eine weitere beispielhafte Ausführungsform einer Klemmeinheit 18 eines erfindungsgemäßen Befestigungssystems, bei der das Klemmelement 22 mit einem mit dem Außengewinde der Spannschraube 32 zusammenwirkenden Innengewinde 36 versehen ist. Die Spannschraube 34 ist somit über die zusammenwirkenden Gewinde relativ zum Klemmelement 22 verstellbar, wodurch die Klemmbacke 24 ein- und ausgefahren wird. Im vorliegenden Fall ist die Klemmbacke 24 im eingefahrenen Zustand dargestellt.

Fig. 9 zeigt die Klemmeinheit 18 gemäß Fig. 8 in einem Zustand, in dem die Klemmbacke 24 ausgefahren ist.

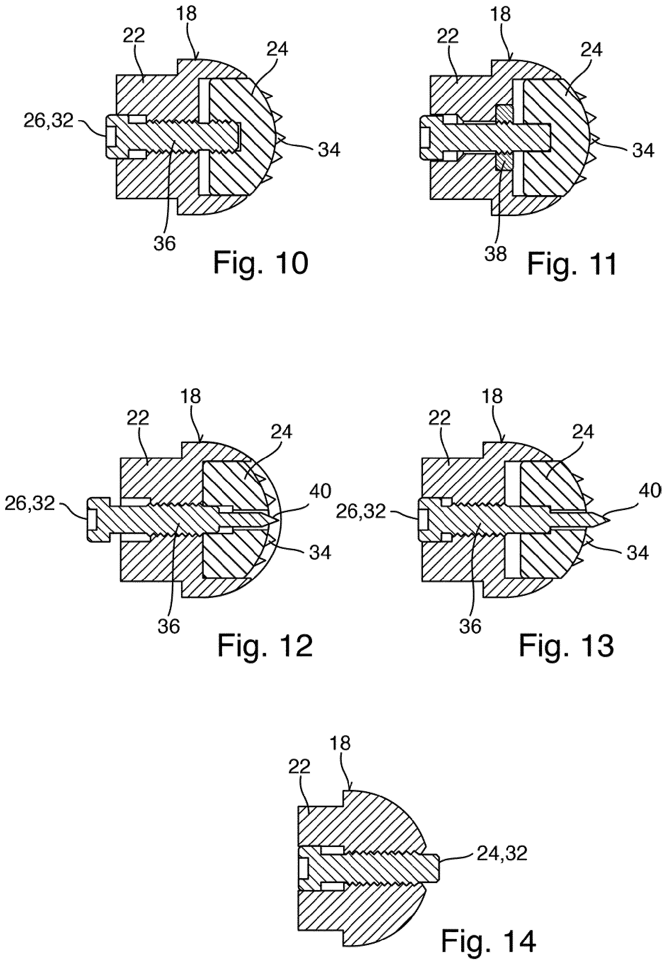

Fig. 10 zeigt in schematischer Darstellung eine weitere beispielhafte Ausführungsform einer Klemmeinheit 18 eines erfindungsgemäßen Befestigungssystems, bei der das Klemmelement 22 mit einem mit dem Außengewinde der Spannschraube 32 zusammenwirkenden Innengewinde 36 versehen ist, die Spannschraube 32 in die Klemmbacke 24 ein- und ausdrehbar ist und das Klemmelement 22 und die Klemmbacke 24 entgegengesetzte Gewinde aufweisen. Pro Umdrehung der Spannschraube 32 ist die Klemmbacke 24 somit mit doppeltem Hub ein- bzw. ausfahrbar.

Fig. 11 zeigt in schematischer Darstellung eine weitere beispielhafte Ausführungsform einer Klemmeinheit 18 eines erfindungsgemäßen Befestigungssystems, bei der die Spannschraube 32 durch eine im Klemmelement 22 gelagerte Mutter 38 hindurchgeführt ist, deren Innengewinde mit dem Außengewinde der Spannschraube 32 zusammenwirkt. Die Spannschraube 32 ist im vorliegenden Fall somit über die Mutter 38 im Klemmelement 22 verstellbar, womit entsprechend auch die Klemmbacke 24 wieder ein- und ausfahrbar ist.

Fig. 12 zeigt in schematischer Darstellung eine weitere beispielhafte Ausführungsform einer Klemmeinheit 18 eines erfindungsgemäßen Befestigungssystems, bei der die Spannschraube 32 der Klemmeinheit 18 durch die Klemmbacke 24 hindurch nach außen geführt ist und an ihrem der benachbarten Stirnseite der Aussparung 12 zugewandten Ende eine Stütze 40 aufweist. Mit einer jeweiligen Betätigung der Spannschraube 32 wird zunächst die Spitze 40 aus der Klemmbacke 24 ausgefahren und anschließend die Klemmbacke 24 durch die Spannschraube 32 mitgenommen und aus dem Klemmelement 22 ausgefahren. In der vorliegenden Fig. 12 ist die Klemmbacke 24 im eingefahrenen Zustand dargestellt.

Fig. 13 zeigt die Klemmeinheit 18 gemäß Fig. 12 in einem Zustand, in dem die Klemmbacke 24 ausgefahren ist.

Auch bei den Ausführungsformen gemäß den Fig. 8 bis 13 kann die der benachbarten Stirnseite der Aussparung 12 zugewandte Außenfläche der Klemmbacke 24 beispielsweise wieder mit einer Struktur 34 versehen sein.

Fig. 14 zeigt in schematischer Darstellung eine weitere beispielhafte Ausführungsform einer Klemmeinheit 18 eines erfindungsgemäßen Befestigungssystems, bei der die Spannschraube 32 der Klemmeinheit 18 direkt gegen die benachbarte Stirnseite der Aussparung 12 pressbar ist und somit die Spannschraube 32 selbst als Klemmbacke 24 dient.

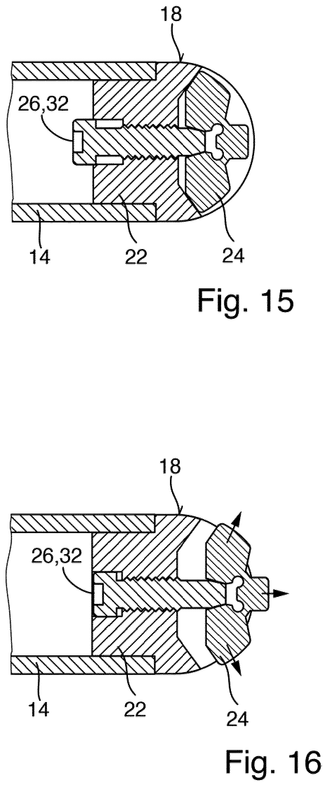

Fig. 15 zeigt in schematischer Darstellung eine weitere beispielhafte Ausführungsform einer Klemmeinheit 18 eines erfindungsgemäßen Befestigungssystems, bei der die Klemmbacke 24 der Klemmeinheit 18 zumindest teilweise elastisch verformbar ausgeführt und mit einer jeweiligen Beaufschlagung durch die Stellmittel 26 nach Art eines Dübels aufspreizbar sind. Auch im vorliegenden Fall umfassen die Stellmittel 26 beispielsweise wieder wenigstens eine Spannschraube 32. In dieser Fig. 15 ist die Klemmbacke 24 im eingefahrenen Zustand dargestellt.

Fig. 16 zeigt die Klemmeinheit 18 gemäß Fig. 15 in einem Zustand, in dem die Klemmbacke 24 ausgefahren ist. Wie durch Pfeile dargestellt, wird die Klemmbacke 24 im vorliegenden Fall in unterschiedlichen Richtungen gegen die benachbarte Begrenzung der Aussparung 12 gepresst, wodurch eine besonders zuverlässige Fixierung der Gleitschiene in der Aussparung 12 erreicht wird.

### Bezugszeichenliste

- 10: Türrahmen, Zarge
- 12: Aussparung
- 14: Gleitschiene
- 16: Befestigungssystem
- 18: Klemmeinheit
- 20: stirnseitiges Ende
- 22: Klemmelement
- 22': erster Abschnitt
- 22": zweiter Abschnitt
- 24: Klemmbacke
- 26: Stellmittel
- 28: Rand
- 30: Stirnseite der Gleitschiene
- 32: Spannschraube
- 34: Struktur
- 36: Innengewinde
- 38: Mutter
- 40: Spitze

## Patentansprüche

1. Befestigungssystem (16) für eine integrierte Gleitschiene (14) eines Türantriebs, zur Befestigung der Gleitschiene (14) in einer im Türrahmen (10) oder im Türflügel vorgesehenen Aussparung (12), mit wenigstens einer Klemmeinheit (18), die ein in ein stirnseitiges Ende (20) der Gleitschiene (14) einsetzbares Klemmelement (22) umfasst, **dadurch gekennzeichnet, dass** in dem Klemmelement (22) eine allgemein in Längsrichtung der Gleitschiene (14) verschiebbar gelagerte Klemmbacke (24) sowie Stellmittel (26) angeordnet sind, über die die Klemmbacke (24) gegen die benachbarte Stirnseite der Aussparung (12) pressbar ist.

2. Befestigungssystem nach Anspruch 1,
**dadurch gekennzeichnet, dass** die Klemmeinheit (18) nur einer der beiden stirnseitigen Enden (20) der Gleitschiene (14) zugeordnet ist.

3. Befestigungssystem nach Anspruch 1,
**dadurch gekennzeichnet, dass** jeweils eine Klemmeinheit (18) beiden stirnseitigen Enden (20) der Gleitschiene (14) zugeordnet ist.

4. Befestigungssystem nach zumindest einem der vorstehenden Ansprüche,
**dadurch gekennzeichnet, dass** das Klemmelement (22) einer jeweiligen Klemmeinheit (18) einen in die Gleitschiene (14) einführbaren ersten Abschnitt (22') und einen zweiten Abschnitt (22") umfasst, der auch nach erfolgter Montage außerhalb der Gleitschiene (14) verbleibt und mit einem radial äußeren Rand (28) an der betreffenden Stirnseite (30) der Gleitschiene (14) zur Anlage kommt.

5. Befestigungssystem nach zumindest einem der vorstehenden Ansprüche,
**dadurch gekennzeichnet, dass** die Stellmittel (26) einer jeweiligen Klemmeinheit (18) wenigstens eine Spannschraube (32) umfassen.

6. Befestigungssystem nach Anspruch 5,
**dadurch gekennzeichnet, dass** die Spannschraube (32) sich zumindest im Wesentlichen parallel zur Längsachse der Gleitschiene (14) erstreckt oder gegenüber der Längsachse der Gleitschiene (14) zur offenen Längsseite der Gleitschiene (14) hin geneigt ist.

7. Befestigungssystem nach Anspruch 5 oder 6,
**dadurch gekennzeichnet, dass** das Klemmelement (22) mit einem mit dem Außengewinde der Spannschraube (32) zusammenwirkenden Innengewinde (36) versehen ist.

8. Befestigungssystem nach Anspruch 7,
**dadurch gekennzeichnet, dass** die Spannschraube (32) in die Klemmbacke (24) ein- und ausdrehbar ist und das Klemmelement (22) und die Klemmbacke (24) entgegengesetzte Gewinde aufweisen.

9. Befestigungssystem nach Anspruch 5 oder 6,
**dadurch gekennzeichnet, dass** die Spannschraube (32) durch eine im Klemmelement (22) gelagerte Mutter (38) hindurchgeführt ist, deren Innengewinde mit dem Außengewinde der Spannschraube (32) zusammenwirkt.

10. Befestigungssystem nach zumindest einem der vorstehenden Ansprüche 1 bis 4,
**dadurch gekennzeichnet, dass** die Stellmittel (26) einer jeweiligen Klemmeinheit (18) einen drehbar im Klemmelement (22) gelagerten Exzenter umfassen, über den die Klemmbacke (24) beaufschlagbar ist.

11. Befestigungssystem nach zumindest einem der vorstehenden Ansprüche,
**dadurch gekennzeichnet, dass** die der benachbarten Stirnseite der Aussparung (12) zugewandte Außenfläche der Klemmbacke (24) einer jeweiligen Klemmeinheit (18) mit einer Struktur (34) versehen ist, wobei die Außenflächenstruktur der Klemmbacke bevorzugt Zacken oder dergleichen umfasst.

12. Befestigungssystem nach Anspruch 5,
**dadurch gekennzeichnet, dass** die Spannschraube (32) einer jeweiligen Klemmeinheit (18) durch die Klemmbacke (24) hindurch nach außen geführt ist und an ihrem der benachbarten Stirnseite der Aussparung (12) zugewandten Ende bevorzugt eine Spitze (40) aufweist.

13. Befestigungssystem nach zumindest einem der vorstehenden Ansprüche,
**dadurch gekennzeichnet, dass** die Klemmbacke (24) einer jeweiligen Klemmeinheit (18) zumindest teilweise elastisch verformbar ausgeführt und mit einer jeweiligen Beaufschlagung durch die Stellmittel (26) nach Art eines Dübels aufspreizbar ist.

14. Befestigungssystem nach Anspruch 5,
**dadurch gekennzeichnet, dass** die Spannschraube (32) einer jeweiligen Klemmeinheit (18) direkt gegen die benachbarte Stirnseite der Aussparung (12) pressbar ist und somit die Spannschraube (32) selbst als Klemmbacke (24) dient.

## Claims

1. Fastening system (16) for an integrated sliding rail (14) of a door drive, for fastening the sliding rail (14) in a cutout (12) provided in the door frame (10) or in the door leaf, comprising at least one clamping unit (18) which comprises a clamping element (22) which can be inserted into a terminal end (20) of the sliding rail (14), **characterized in that** a clamping jaw (24), which is mounted so as to be displaceable generally in the longitudinal direction of the sliding rail (14), and actuating means (26) are arranged in the clamping element (22), via which actuating means the clamping jaw (24) can be pressed against the adjacent end side of the cutout (12).

2. Fastening system according to Claim 1, **characterized in that** the clamping element (18) is assigned to only one of the two terminal ends (20) of the sliding rail (14).

3. Fastening system according to Claim 1, **characterized in that** one clamping unit (18) each is assigned to the two terminal ends (20) of the sliding rail (14).

4. Fastening system according to at least one of the preceding claims,
**characterized in that** the clamping element (22) of a respective clamping unit (18) comprises a first portion (22') which can be inserted into the sliding rail (14) and a second portion (22") which remains outside the sliding rail (14) even after completed mounting and comes to bear against the associated end side (30) of the sliding rail (14) by way of a radially outer edge (28).

5. Fastening system according to at least one of the preceding claims,
**characterized in that** the actuating means (26) of a respective clamping unit (18) comprise at least one clamping screw (32).

6. Fastening system according to Claim 5,
**characterized in that** the clamping screw (32) extends at least substantially parallel to the longitudinal axis of the sliding rail (14) or is inclined with respect to the longitudinal axis of the sliding rail (14) towards the open longitudinal side of the sliding rail (14).

7. Fastening system according to Claim 5 or 6,
**characterized in that** the clamping element (22) is provided with an internal thread (36) which interacts with the external thread of the clamping screw (32).

8. Fastening system according to Claim 7,
**characterized in that** the clamping screw (32) can be screwed into and out of the clamping jaw (24), and the clamping element (22) and the clamping jaw (24) have opposite threads.

9. Fastening system according to Claim 5 or 6,
**characterized in that** the clamping screw (32) is guided through a nut (38) which is mounted in the clamping element (22) and whose internal thread interacts with the external thread of the clamping screw (32).

10. Fastening system according to at least one of the preceding Claims 1 to 4,
**characterized in that** the actuating means (26) of a respective clamping unit (18) comprise an eccentric which is rotatably mounted in the clamping element (22) and via which the clamping jaw (24) can be acted upon.

11. Fastening system according to at least one of the preceding claims,
**characterized in that** the outer face, which faces the adjacent end side of the cutout (12), of the clamping jaw (24) of a respective clamping unit (18) is provided with a structure (34), wherein the outer face structure of the clamping jaw preferably comprises teeth or the like.

12. Fastening system according to Claim 5,
**characterized in that** the clamping screw (32) of a respective clamping unit (18) is guided outwards through the clamping jaw (24) and preferably has a point (40) at its end facing the adjacent end side of the cutout (12).

13. Fastening system according to at least one of the preceding claims,
**characterized in that** the clamping jaw (24) of a respective clamping unit (18) is configured to be at least partially elastically deformable and can be spread apart in the manner of a dowel when respectively acted upon by the actuating means (26).

14. Fastening system according to Claim 5,
**characterized in that** the clamping screw (32) of a respective clamping unit (18) can be pressed directly against the adjacent end side of the cutout (12) and thus the clamping screw (32) itself serves as a clamping jaw (24).

## Revendications

1. Système de fixation (16) pour un rail de glissement intégré (14) d'un entraînement de porte, pour la fixation du rail de glissement (14) dans un évidement (12) prévu dans le cadre de porte (10) ou dans le battant de porte, comprenant au moins une unité de serrage (18) qui comprend un élément de serrage (22) pouvant être inséré dans une extrémité frontale (20) du rail de glissement (14),
**caractérisé en ce qu'**une mâchoire de serrage (24) supportée de manière déplaçable généralement dans la direction longitudinale du rail de glissement (14) ainsi que des moyens de réglage (26) sont disposés dans l'élément de serrage (22), par le biais desquels moyens de réglage la mâchoire de serrage (24) peut être pressée contre le côté frontal adjacent de l'évidement (12).

2. Système de fixation selon la revendication 1,
**caractérisé en ce que** l'unité de serrage (18) est seulement associée à l'une des deux extrémités frontales (20) du rail de glissement (14).

3. Système de fixation selon la revendication 1,
**caractérisé en ce qu'**une unité de serrage (18) est à chaque fois associée aux deux extrémités frontales (20) du rail de glissement (14).

4. Système de fixation selon au moins l'une quelconque des revendications précédentes,
**caractérisé en ce que** l'élément de serrage (22) d'une unité de serrage respective (18) comprend une première portion (22') pouvant être introduite dans le rail de glissement (14) et une deuxième portion (22") qui reste à l'extérieur du rail de glissement (14) après l'achèvement du montage et qui vient en appui avec un bord radialement extérieur (28) contre le côté frontal concerné (30) du rail de glissement (14).

5. Système de fixation selon au moins l'une quelconque des revendications précédentes,
**caractérisé en ce que** les moyens de réglage (26) d'une unité de serrage respective (18) comprennent au moins une vis de serrage (32).

6. Système de fixation selon la revendication 5,
**caractérisé en ce que** la vis de serrage (32) s'étend au moins essentiellement parallèlement à l'axe longitudinal du rail de glissement (14) ou est inclinée par rapport à l'axe longitudinal du rail de glissement (14) vers le côté longitudinal ouvert du rail de glissement (14).

7. Système de fixation selon la revendication 5 ou 6,
**caractérisé en ce que** l'élément de serrage (22) est pourvu d'un filetage intérieur (36) coopérant avec le filetage extérieur de la vis de serrage (32).

8. Système de fixation selon la revendication 7,
**caractérisé en ce que** la vis de serrage (32) peut être vissée et dévissée dans la mâchoire de serrage (24) et l'élément de serrage (22) et la mâchoire de serrage (24) présentent des filetages opposés.

9. Système de fixation selon la revendication 5 ou 6,
**caractérisé en ce que** la vis de serrage (32) est guidée à travers un écrou (38) supporté dans l'élément de serrage (22), dont le filetage intérieur coopère avec le filetage extérieur de la vis de serrage (32).

10. Système de fixation selon au moins l'une quelconque des revendications 1 à 4,
**caractérisé en ce que** les moyens de réglage (26) d'une unité de serrage respective (18) comprennent un excentrique supporté à rotation dans l'élément de serrage (22), par le biais duquel la mâchoire de serrage (24) peut être sollicitée.

11. Système de fixation selon au moins l'une quelconque des revendications précédentes,
**caractérisé en ce que** la surface extérieure de la mâchoire de serrage (24) d'une unité de serrage respective (18) tournée vers le côté frontal adjacent de l'évidement (12) est pourvue d'une structure (34), la structure de surface extérieure de la mâchoire de serrage comprenant de préférence des dents ou similaires.

12. Système de fixation selon la revendication 5,
**caractérisé en ce que** la vis de serrage (32) d'une unité de serrage respective (18) est guidée vers l'extérieur à travers la mâchoire de serrage (24) et présente de préférence une pointe (40) au niveau de son extrémité tournée vers le côté frontal adjacent de l'évidement (12).

13. Système de fixation selon au moins l'une quelconque des revendications précédentes,
**caractérisé en ce que** la mâchoire de serrage (24) d'une unité de serrage respective (18) est réalisée de manière au moins en partie déformable élastiquement et peut être écartée à la manière d'une cheville avec une sollicitation respective par les moyens de réglage (26).

14. Système de fixation selon la revendication 5,
**caractérisé en ce que** la vis de serrage (32) d'une unité de serrage respective (18) peut être pressée directement contre le côté frontal adjacent de l'évidement (12) et de ce fait la vis de serrage (32) sert elle-même de mâchoire de serrage (24).
